# EUROPÄISCHE PATENTANMELDUNG

(11) **EP 3 862 611 A1**
(43) Veröffentlichungstag der Anmeldung: **11.08.2021**
(21) Anmeldenummer: 20156149.5
(22) Anmeldetag: 07.02.2020
(51) Int. Cl.: F16L 39/00

(54) **FLANSCHVERBINDUNG ZUM VERBINDEN ZWEIER DOPPELWANDIGE LEITUNGSTEILE, GASVERSORGUNGSSYSTEM UND GROSSMOTOR**

(71) Anmelder: Winterthur Gas & Diesel AG, 8401 Winterthur (CH)
(72) Erfinder: Gubler, Aaron, 8400 Winterthur (CH); Sichler, Martin, 8311 Brütten (CH); Spahni, Marc, 8472 Seuzach (CH)
(74) Vertreter: IPS Irsch AG

(57) **Zusammenfassung**

Es wird ein eine Flanschverbindung zum Verbinden zweier doppelwandiger Leitungsteile eines Gasversorgungssystems vorgeschlagen, welche zwei erste Flansche (2) umfasst, von denen jeder mit einer inneren Wandung (1051, 1301) eines der beiden Leitungsteile (105, 130) verbindbar ist, sowie einen zentral angeordneten Fluidkanal (4) für ein erstes Fluid, der sich in einer axialen Richtung (A) durch die beiden ersten Flansche (2) hindurch erstreckt, wobei jeder erste Flansch (2) eine axiale Stirnfläche (21) umfasst und die beiden axialen Stirnflächen (21) aneinander anliegen, wobei mindestens ein erstes Befestigungselement (5) vorgesehen ist, mit welchem die beiden ersten Flansche (2) aneinander fixiert werden können, wobei zwei zweite Flansche (3) vorgesehen sind, von denen jeder mit einer äusseren Wandung (1052, 1302) eines der beiden Leitungsteile verbindbar ist, wobei die beiden zweiten Flansche (3) eine Strömungsverbindung (7) für ein zweites Fluid begrenzen, durch welche das zweite Fluid die Flanschverbindung (1) getrennt von dem ersten Fluid durchströmen kann, wobei mindestens ein zweites Befestigungselement (6) vorgesehen ist, mit welchem die beiden zweiten Flansche relativ zueinander fixiert werden können, und wobei das zweite Befestigungselement (6) verschieden von dem ersten Befestigungselement (5) ist. Ferner werden ein Gasversorgungssystem für einen Grossmotor sowie ein Grossmotor vorgeschlagen.

## Beschreibung

Die Erfindung betrifft eine Flanschverbindung zum Verbinden zweier doppelwandiger Leitungsteile, sowie ein Gasversorgungsystem für einen Grossmotor, sowie einen Grossmotor gemäss dem Oberbegriff des unabhängigen Patentanspruchs der jeweiligen Kategorie.

Grossmotoren werden klassischerweise als Grossdieselmotoren mit Schweröl betrieben. Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Unter den Aspekten des wirtschaftlichen und effizienten Betriebs, der Einhaltung von Abgasgrenzwerten und der Verfügbarkeit von Ressourcen sucht man heute auch bei Grossmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas) bekannt.

Es sind insbesondere auch solche Grossmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-BrennstoffGemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Ein Beispiel für einen Grossmotor, der mit zwei unterschiedlichen Brennstoffen betreibbar ist, ist ein längsgespülter Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel oder Multi-Fuel Grossmotoren, die ausser im Dieselbetrieb auch noch in einem anderen Betrieb, beispielsweise dem Otto-Betrieb, betreibbar sind.

Natürlich kann ein Grossmotor auch als Gasmotor ausgestaltet sein, der nur mit einem Gas oder mehreren Gasen als Brennstoff betrieben werden kann.

Für den Betrieb mit Gasen als Brennstoff muss der Grossmotor ein Gasversorgungssystem aufweisen, mit welchem das als Brennstoff verwendete Gas den Zylindern zuführbar ist. Typischerweise umfasst ein Gasversorgungssystem zumindest ein Gaszuführsystem zum Einbringen des Gases in den Zylinder und ein Druckregulierungssystem, mit welchem der Gasdruck auf den gewünschten Druck für die Einbringung in den Zylinder eingestellt und für das Gaszuführsystem bereitgestellt wird. Ein solches Druckregulierungssystem wird auch als iGPR (integrated gas pressure regulation) bezeichnet. Ein iGPR umfasst typischerweise ausser einem Druckregelventil noch weitere Komponenten wie beispielsweise Durchflussmesser, verschiedene Sensorboxen, Absperrventile und Filtereinrichtungen.

Für solche Gasversorgungssysteme werden aus Sicherheitsgründen doppelwandige Leitungen für das Gas verwendet. Solche Leitungen oder Leitungsteile umfassen einen inneren Kanal, durch welchen das Gas strömt, sowie einen ringförmigen äusseren Kanal, der koaxial zum inneren Kanal ausgestaltet ist. In dem äusseren Kanal strömt ein zweites Fluid als Schutzmedium, beispielsweise Luft. Dabei wird üblicherweise das zweite Fluid in dem äusseren Kanal im Gegenstrom zu dem ersten Fluid, hier also dem Gas, im inneren Kanal geführt. Ausserdem wird die doppelwandige Leitung so betrieben, dass in dem äusseren Kanal ein geringerer Druck herrscht als in dem inneren Kanal. Kommt es nun in dem gasführenden Leitungssystem, also beispielsweise in einem inneren Kanal zu einer Leckage, so tritt das Gas aus dem inneren Kanal aus und gelangt in den äusseren Kanal, wo es von dem Schutzmedium entgegen der Strömungsrichtung des Gases im inneren Kanal abtransportiert wird. Damit diese Schutzfunktion auch immer gewährleistet ist, muss sichergestellt sein, dass das Gas führende innere System stets von dem das Schutzmedium führenden äusseren System umgeben ist.

Auch die verschiedenen Komponenten des iGPR werden über jeweils doppelwandige Leitungsteile miteinander verbunden. Dazu ist es notwendig solche Leitungsteile mit einem hohen Mass an Betriebssicherheit miteinander zu verbinden, sodass alle Komponenten und die sie verbindenden Leitungsteile, welche von dem als Brennstoff dienenden Gas durchströmt werden, durch das Schutzmedium gegen ein Austreten des Gases in die Umwelt geschützt sind.

Dazu wird beispielsweise in der DK 2017 70407 A1 eine Flanschverbindung vorgeschlagen, mit welcher zwei doppelwandige Leitungsteile miteinander verbunden werden können. Diese Flanschverbindung umfasst eine zentrale axiale Bohrung für das Gas sowie mehrere nicht-zentrale Kanäle, durch welche das Schutzmedium die Flanschverbindung getrennt von dem Gas durchströmen kann. Die beiden Flansche an den Enden der zu verbindenden Leitungsteile werden in an sich bekannter Weise durch eine Mehrzahl von Schraubverbindungen zusammengepresst. Falls diese Schraubverbindungen versagen, werden sowohl die gasführende zentrale Bohrung für das Gas als auch die nicht-zentralen Kanäle für das Schutzmedium voneinander getrennt oder zumindest undicht, sodass das Gas in die Umwelt austreten kann. Das stellt ein erhebliches Sicherheitsrisiko dar.

Ausgehend von diesem Stand der Technik ist es daher eine Aufgabe der Erfindung, eine Flanschverbindung zum Verbinden zweier doppelwandiger Leitungsteile eines Gasversorgungssystems vorzuschlagen, welche eine erhöhte Betriebssicherheit gewährleistet. Ferner ist es eine Aufgabe der Erfindung, ein Gasversorgungssystem für einen Grossmotor vorzuschlagen, welches eine solche Flanschverbindung umfasst. Eine weitere Aufgabe der Erfindung ist es, einen Grossmotor mit einem solchen Gasversorgungssystem vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also eine Flanschverbindung zum Verbinden zweier doppelwandiger Leitungsteile eines Gasversorgungssystems vorgeschlagen, welche zwei erste Flansche umfasst, von denen jeder mit einer inneren Wandung eines der beiden Leitungsteile verbindbar ist, sowie einen zentral angeordneten Fluidkanal für ein erstes Fluid, der sich in einer axialen Richtung durch die beiden ersten Flansche hindurch erstreckt, wobei jeder erste Flansch eine axiale Stirnfläche umfasst und die beiden axialen Stirnflächen aneinander anliegen, wobei mindestens ein erstes Befestigungselement vorgesehen ist, mit welchem die beiden ersten Flansche aneinander fixiert werden können, wobei zwei zweite Flansche vorgesehen sind, von denen jeder mit einer äusseren Wandung eines der beiden Leitungsteile verbindbar ist, wobei die beiden zweiten Flansche eine Strömungsverbindung für ein zweites Fluid begrenzen, durch welche das zweite Fluid die Flanschverbindung getrennt von dem ersten Fluid durchströmen kann, wobei mindestens ein zweites Befestigungselement vorgesehen ist, mit welchem die beiden zweiten Flansche relativ zueinander fixiert werden können, und wobei das zweite Befestigungselement verschieden von dem ersten Befestigungselement ist.

Gemäss der Erfindung wird also eine Flanschverbindung vorgeschlagen, welche zwei erste Flansche und zwei zweite Flansche umfasst, wobei die beiden ersten Flansche den Fluidkanal für das erste Medium umfassen, und die beiden zweiten Flansche die Strömungsverbindung für das zweite Fluid begrenzen, sodass das zweite Fluid die Flanschverbindung getrennt von dem ersten Fluid durchströmen kann. Da das erste Befestigungselement, welches die beiden ersten Flansche aneinander fixiert, verschieden ist von dem zweiten Befestigungselement, welches die beiden zweiten Flansche relativ zueinander fixiert, resultiert eine deutlich erhöhte Betriebssicherheit, denn wenn das erste Befestigungselement versagt oder eine Undichtigkeit verursacht, so wird durch das zweite Befestigungselement ein Austreten des ersten Fluids, also beispielsweise des als Brennstoff verwendeten Gases, in die Umwelt zuverlässig vermieden.

Aus praktischen Gründen ist es bevorzugt, dass eine Mehrzahl von ersten Befestigungselementen oder eine Mehrzahl von zweiten Befestigungselementen vorgesehen ist, wobei die ersten Befestigungselemente oder die zweiten Befestigungselemente als Verschraubungen ausgestaltet sind.

Gemäss einer bevorzugten Ausführungsform sind die beiden zweiten Flansche so ausgestaltet und angeordnet, dass sie sich bezüglich der axialen Richtung überlappen. Dabei ist vorzugsweise in dem Bereich, in welchem sich die beiden zweiten Flansche überlappen, ein radial angeordnetes Dichtungselement zwischen den beiden zweiten Flanschen vorgesehen.

Durch die radiale Anordnung dieses Dichtungselements können relative Bewegungen zwischen den beiden zweiten Flanschen aufgenommen werden, ohne die Dichtfunktion zu beeinträchtigen.

In einem ersten bevorzugten Ausführungsbeispiel bilden die beiden zweiten Flansche das erste Befestigungselement und sind so ausgestaltet und angeordnet, dass sie einen jeweils radial aussenliegenden Bereich der beiden ersten Flansche umgreifen, sodass die beiden radial aussenliegenden Bereiche der ersten Flansche bezüglich der axialen Richtung zwischen den beiden zweiten Flanschen angeordnet sind. Bei diesem Ausführungsbeispiel werden also die beiden zweiten Flansche dazu genutzt, die beiden ersten Flansche gegeneinander zu pressen.

Dabei ist es insbesondere bevorzugt, dass eine Mehrzahl von zweiten Befestigungselementen vorgesehen ist, wobei die zweiten Befestigungselemente Verschraubungen umfassen, sowie eine Bajonettverbindung, welche die Fixierung der beiden zweiten Flansche sichert. Falls dann die Verschraubungen der zweite Befestigungselement versagen sollten, so gewährleistet die Bajonettverbindung, dass die zweiten Flansche relativ zueinander fixiert bleiben, und somit auch das erste Befestigungselement vollständig funktionstüchtig bleibt.

In einem zweiten bevorzugten Ausführungsbeispiel sind die beiden zweiten Flansche bezüglich der axialen Richtung beabstandet zueinander angeordnet, und die beiden ersten Flansche bezüglich der axialen Richtung zwischen den beiden zweiten Flanschen angeordnet, wobei eine im Wesentlichen zylindrische Hülse vorgesehen ist, welche die beiden ersten Flansche und die beiden zweiten Flansche radial aussenliegend umgibt. Die Hülse dient dazu, den ringförmigen Raum zwischen den beiden zweiten Flanschen bezüglich der radialen Richtung abzuschliessen, sodass das zweite Fluid durch die Hülse von dem einen zweiten Flansch zu dem anderen zweiten Flansch strömen kann.

Dabei ist es eine bevorzugte Massnahme, dass eine Mehrzahl von Fixierungselementen vorgesehen ist, welche die Hülse bezüglich der beiden zweiten Flansche fixiert.

Vorzugsweise ist zwischen jedem zweiten Flansch und der Hülse jeweils ein Dichtelement vorgesehen, sodass das zweite Fluid oder -im Störfall- die Mischung aus dem zweiten und dem ersten Fluid nicht aus der Hülse in die Umgebung ausströmen kann. Bevorzugt sind die Dichtelemente jeweils als ein O-Ring ausgestaltet, welcher in eine Umfangsnut in dem jeweiligen zweiten Flansch eingelegt ist

Eine weitere bevorzugte Ausgestaltung besteht darin, dass jeder erste Flansch einen Kragen aufweist, welcher jeweils die axiale Stirnfläche des ersten Flansches bildet, wobei das erste Befestigungselement als Klemmvorrichtung ausgestaltet ist, welche zwei Klemmelemente umfasst, die jeweils eine in Umfangsrichtung der ersten Flansche verlaufende Nut aufweisen, welche zur Aufnahme der beiden Kragen ausgestaltet ist, und wobei eine Mehrzahl von Spannelementen vorgesehen ist, mit denen die Klemmelemente gegeneinander verspannbar sind. Bei dieser Ausgestaltung werden die beiden ersten Flansche also mit Hilfe einer Klemmvorrichtung gegeneinander gepresst.

Dabei sind vorteilhafterweise die beiden Kragen derart ausgestaltet, dass sie gemeinsam in Umfangsrichtung gesehen ein trapezförmiges Profil bilden, das sich in radialer Richtung nach aussen verjüngt. Durch diese Ausgestaltung ist es besonders effizient möglich, die axialen Stirnflächen der ersten Flansche gegeneinander zu pressen.

Aus praktischen Gründen ist es bevorzugt, wenn jedes Spannelement eine Schraube umfasst, die sich jeweils senkrecht zur axialen Richtung erstreckt.

Eine weitere vorteilhafte Massnahme besteht darin, dass die Fixierungselemente eine Mehrzahl von Schrauben umfassen, die in axialer Richtung jeweils länger sind als die Hülse, welche die zweiten Flansche umgibt.

Durch die Erfindung wird ferner ein Gasversorgungssystem für einen Grossmotor vorgeschlagen, mit welchem mindestens einem Zylinder des Grossmotors ein Gas als Brennstoff zuführbar ist, umfassend ein erstes doppelwandiges Leitungsteil sowie ein zweites doppelwandiges Leitungsteil, wobei jedes Leitungsteil einen inneren Kanal für den gasförmigen Brennstoff umfasst, sowie einen um den inneren Kanal herum angeordneten äusseren Kanal für ein zweites Fluid, wobei die beiden doppelwandigen Leitungsteile mit einer Flanschverbindung verbunden sind, die gemäss der Erfindung ausgestaltet ist.

Ferner wird durch die Erfindung ein Grossmotor vorgeschlagen mit mindestens einem Zylinder, wobei ein Gasversorgungssystem vorgesehen ist, mit welchem jedem Zylinder ein Gas als Brennstoff zuführbar ist, wobei das Gasversorgungssystem erfindungsgemäss ausgestaltet ist.

In einer bevorzugten Ausführungsform ist der Grossmotor als längsgespülter Zweitakt-Grossdieselmotor ausgestaltet, vorzugsweise als Dual-Fuel Grossdieselmotor, der in einem Flüssigmodus betreibbar ist, in welchem ein flüssiger Brennstoff zur Verbrennung in den Zylinder eingebracht wird, und der ferner in einem Gasmodus betreibbar ist, in welchem ein Gas als Brennstoff in den Zylinder eingebracht wird.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine Aufsicht auf ein erstes Ausführungsbeispiel einer erfindungsgemässen Flanschverbindung in axialer Richtung,
- Fig. 2:: eine Schnittdarstellung des Ausführungsbeispiels aus Fig. 1 in einem Schnitt entlang der Schnittlinie II-II in Fig. 1,
- Fig. 3:: eine Schnittdarstellung des Ausführungsbeispiels aus Fig. 1 in einem Schnitt entlang der Schnittlinie III-III in Fig. 1,
- Fig. 4:: eine Ansicht eines zweiten Ausführungsbeispiels einer erfindungsgemässen Flanschverbindung,
- Fig. 5:: eine Ansicht des zweiten Ausführungsbeispiels, wobei die Hülse und die Fixierungselemente entfernt sind,
- Fig. 6:: eine Schnittdarstellung des zweiten Ausführungsbeispiels in einem Schnitt entlang der axialen Richtung,
- Fig. 7:: eine Schnittdarstellung des zweiten Ausführungsbeispiels in einem Schnitt entlang der Schnittlinie VII-VII in Fig. 6,
- Fig. 8:: eine Ansicht eines dritten Ausführungsbeispiels einer erfindungsgemässen Flanschverbindung,
- Fig. 9:: eine Ansicht des dritten Ausführungsbeispiels, wobei die Hülse und die Fixierungselemente entfernt sind,
- Fig. 10:: eine Schnittdarstellung des dritten Ausführungsbeispiels in einem Schnitt entlang der axialen Richtung, und
- Fig. 11:: eine schematische Darstellung eines Ausführungsbeispiels eines erfindungsgemässen Gasversorgungssystems in einem

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung anhand von Ausführungsbeispielen wird mit beispielhaftem Charakter auf den für die Praxis besonders wichtigen Fall eines Grossmotors Bezug genommen, der als Dual-Fuel Grossdieselmotor ausgestaltet ist, also als ein Motor, der mit zwei unterschiedlichen Brennstoffen betrieben werden kann. Im Speziellen kann dieses Ausführungsbeispiel des Grossdieselmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise Erdgas, in Form eines vorgemischten Luft-Brennstoff-Gemisches im Brennraum zur Zündung gebracht wird. Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbst entzündet und dadurch die Fremdzündung des Luft-BrennstoffGemisches im Brennraum verursacht.

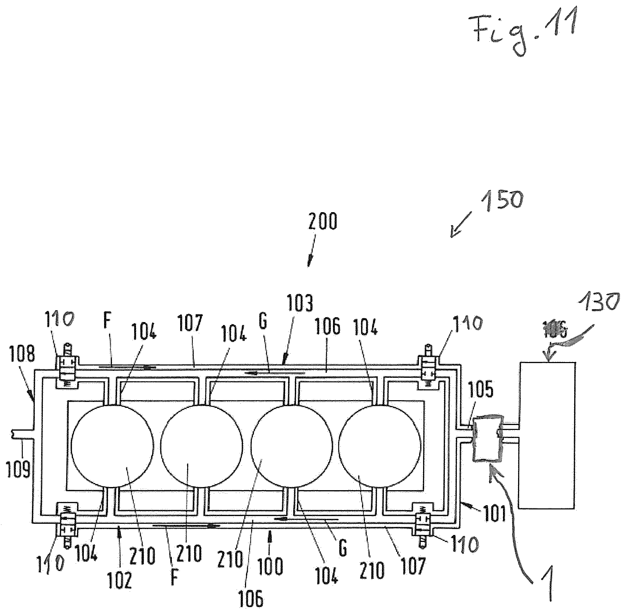

Im Gasmodus benötigt der Grossmotor ein Gas, beispielsweise ein Erdgas als Brennstoff. Dafür wird ein Gasversorgungssystem benötigt. Fig. 11 zeigt in einer schematischen Darstellung ein Ausführungsbeispiel eines erfindungsgemässen Gasversorgungssystems in dem Grossmotor. Der Grossmotor ist in seiner Gesamtheit mit dem Bezugszeichen 200 bezeichnet und das Gasversorgungssystem mit dem Bezugszeichen 150. Das Gasversorgungssystem 150 umfasst ein Gaszuführsystem 100 zum Einbringen des Gases in die Zylinder und ein Druckregulierungssystem 130, mit welchem der Gasdruck auf den gewünschten Druck für die Einbringung in die Zylinder eingestellt und für das Gaszuführsystem 100 bereitgestellt wird. Ein solches Druckregulierungssystem 130 wird auch als iGPR (integrated gas pressure regulation) bezeichnet. Ein iGPR umfasst typischerweise ausser einem Druckregelventil noch weitere Komponenten wie beispielsweise Durchflussmesser, verschiedene Sensorboxen, Absperrventile und Filtereinrichtungen.

Bei den hier beschriebenen Ausführungsbeispielen wird auf einen Grossmotor Bezug genommen, der als längsgespülter Dual-Fuel Zweitakt-Grossdieselmotor ausgestaltet ist.

Der Grossdieselmotor 200 hat mindestens einen, üblicherweise aber eine Mehrzahl von Zylindern 210. In Fig. 11 sind insgesamt vier Zylinder 210 dargestellt. Im Inneren jedes Zylinders ist in an sich bekannter Art ein Kolben (nicht dargestellt) entlang einer Zylinderachse zwischen einem oberen Totpunkt und einem unteren Totpunkt hin und her bewegbar angeordnet. Der Kolben ist in an sich bekannter Weise über eine Kolbenstange (nicht dargestellt) mit einem Kreuzkopf (nicht dargestellt) verbunden, welcher über eine Schubstange (nicht dargestellt) mit einer Kurbelwelle (nicht dargestellt) verbunden ist, sodass die Bewegung des Kolbens über die Kolbenstange, den Kreuzkopf und die Schubstange auf die Kurbelwelle übertragen wird, um diese zu drehen. Die Oberseite des Kolbens begrenzt gemeinsam mit einem Zylinderdeckel (nicht dargestellt) einen Brennraum, in welchen ein Brennstoff für die Verbrennung eingebracht wird. Im Gasmodus ist dieser Brennstoff ein Gas, beispielsweise ein Erdgas wie LNG (Liquefied Natural Gas). Das Gas wird bei einem Niederdruckverfahren beispielsweise durch die zylindrische Wandfläche des jeweiligen Zylinders 210 bzw. durch den Zylinderliner in den Zylinder 210 eingebracht, vorzugsweise etwa in der Mitte zwischen dem oberen und dem unteren Totpunkt des Kolbens. Im Zylinder 210 vermischt sich das Gas bei der Kompressionsbewegung des Kolbens mit der Spülluft und bildet somit ein zündfähiges Luft-Brennstoffgemisch, welches dann fremdgezündet wird, wenn sich der Kolben ungefähr im oberen Totpunkt befindet. Die Fremdzündung erfolgt vorzugsweise mittels der Einspritzung eines selbstzündenden Brennstoffs, z.B. Schweröl oder ein Dieselkraftstoff, in eine Vorkammer des jeweiligen Zylinders.

Wie dies in Fig. 11 dargestellt ist, sind für jeden Zylinder 210 jeweils zwei Gaszuführleitungen 104 vorgesehen, von denen jede zu einer Gaseinlassdüse (nicht explizit dargestellt) am Zylinder 210 bzw. am Zylinderliner führt. Die beiden Gaseinlassdüsen jedes Zylinders 210 liegen sich vorzugsweise diametral gegenüber. Die Gaszuführleitungen 104 zweigen von einer zweiten bzw. dritten Leitung 102 bzw. 103 ab, die als Hauptleitungen ausgestaltet sind, um das Gas zu den Zylindern 210 zu führen. Von der darstellungsgemäss oberen Leitung, nämlich der dritten Leitung 103, zweigt zu jedem Zylinder 210 jeweils eine der Gaszuführleitungen 104 ab, und von der darstellungsgemäss unteren Leitung, nämlich der zweiten Leitung 102, zweigt auch jeweils zu jedem Zylinder 210 eine der Gaszuführleitungen 104 ab. An beiden Enden der zweiten Leitung 102 und an beiden Enden der dritten Leitung 103 ist jeweils ein Absperrventil 110 vorgesehen. Jedes Absperrventil 110 hat eine Schliessstellung und eine Offenstellung. Ist das Absperrventil 110 in der Offenstellung so kann das Gas - oder allgemeiner ein erstes Fluid - das Absperrventil 110 durchströmen. Ist das Absperrventil 110 in der Schliessstellung, so ist der Durchgang durch das Absperrventil 110 für das Gas bzw. das erste Fluid versperrt.

Darstellungsgemäss rechts der beiden Absperrventile 110, welche am darstellungsgemäss rechten Ende der zweiten Leitung 102 und der dritten Leitung 103 angeordnet sind, ist eine erste Leitung 101 vorgesehen, welche diese beiden Absperrventile 110 miteinander verbindet. An der ersten Leitung 101 ist ein Gaseinlass 105 vorgesehen, durch welchen das Gas von dem Druckregulierungssystem 130 in die erste Leitung 101 eingespeist werden kann. Das nicht im Detail dargestellte Druckregulierungssystem130 umfasst in an sich bekannter Weise zumindest einen Druckregelventil. Ferner können in dem Druckregulierungssystem 130 ein oder mehrere Filter, ein Durchflussmesser, verschiedene Sensoren, Be- oder Entlüftungsventile, sowie ein Absperrventil vorgesehen sein. Dem Druckregulierungssystem 130 wird das Gas aus einem nicht dargestellten Vorratsbehälter für das als Brennstoff verwendete Gas zugeführt.

Alle gasführenden Leitungen, also insbesondere jede der Gaszuführleitungen 104, die erste Leitung 101, die zweite Leitung 102,die dritte Leitung 103 sowie alle Leitungen bzw. Leitungsteile, welche die nicht im Detail dargestellten Komponenten des Druckregulierungssystems 130 verbinden, und die Verbindung zwischen dem Druckregulierungssystem 130 und dem Gaseinlass 105, sind jeweils als doppelwandige Leitung bzw. als doppelwandiges Leitungsteil ausgestaltet, welche(s) einen inneren Kanal 106 aufweist, durch welchen das als Brennstoff verwendete Gas strömt, sowie einen äusseren Kanal 107 für ein zweites Fluid, welches als Schutzmedium dient. Dieses zweite Fluid ist beispielsweise Luft. Der äussere Kanal 107 ist beispielsweise als ringförmiger Kanal ausgestaltet und koaxial zum inneren Kanal 106 angeordnet.

Darstellungsgemäss links der beiden Absperrventile 110, welche am darstellungsgemäss linken Ende der zweiten Leitung 102 und der dritten Leitung 103 angeordnet sind, ist eine Spülleitung 108 vorgesehen, welche diese beiden Absperrventile 110 miteinander verbindet. An der Spülleitung 108 ist ein Auslass 109 vorgesehen, durch welchen ein Fluid aus der Spülleitung 108 abgeführt werden kann. Die Spülleitung 108 wird für den normalen Gasbetrieb des Grossmotors 200 nicht benötigt, das heisst im normalen Betrieb sind die beiden darstellungsgemäss linken Absperrventile 110 jeweils in der Schliessstellung. Für Reinigungs- oder Instandhaltungsarbeiten können diese beiden Absperrventile 110 geöffnet werden, sodass ein Fluid, beispielsweise ein Reinigungsmittel, durch die inneren Kanäle 106 geführt werden und über die Spülleitung 108 sowie den Auslass 109 abgeführt werden kann. Da die Spülleitung 108 für den normalen Gasbetrieb nicht benötigt wird, ist sie vorzugsweise nur als einwandige Leitung ausgestaltet.

Während des Betriebs des Grossmotors 200 im Gasmodus sind die beiden darstellungsgemäss linken Absperrventile 110 geschlossen und die beiden darstellungsgemäss rechten Absperrventile 110 sind geöffnet. Das als Brennstoff verwendete Gas wird dann von dem Druckregulierungssystem 130 über den Gaseinlass 105 in den inneren Kanal 106 der ersten Leitung 101 eingebracht und strömt von dort durch die inneren Kanäle 106 der zweiten bzw. dritten Leitung 102 bzw. 103 und der Gaszuführleitungen 104 zu den Gaseinlassdüsen an den Zylindern 210 wie dies durch die Pfeile mit dem Bezugszeichen G in Fig. 11 dargestellt ist.

Gleichzeitig wird ein zweites Fluid als Schutzmedium durch die äusseren Kanäle 107 der Gaszuführleitungen 104, der zweiten Leitung 102, der dritten Leitung 103 und der ersten Leitung 101 geführt, um im Falle einer Leckage ein Austreten des Gases in die Umwelt zu verhindern. Vorzugsweise wird das Schutzmedium im Gegenstrom durch die äusseren Kanäle 107 geführt wie dies durch die Pfeile mit dem Bezugszeichen F in Fig. 11 dargestellt ist. Das heisst, das Schutzmedium strömt in entgegengesetzter Richtung wie das Gas. Ferner ist der Druck des Schutzmediums in den äusseren Kanälen 107 so eingestellt, dass er kleiner ist als der Druck des Gases in den inneren Kanälen 106. Das als Schutzmedium dienende zweite Fluid ist vorzugsweise Luft.

Die verschiedenen doppelwandigen Leitungen sowie die verschiedenen Leitungsteile, welche die Komponenten des Druckregulierungssystems 130 miteinander verbinden, müssen über möglichst sicher ausgestaltete Flanschverbindungen verbunden werden. Mit beispielhaftem Charakter ist in Fig. 11 nur eine dieser Flanschverbindungen dargestellt, die gesamthaft mit dem Bezugszeichen 1 bezeichnet ist. In Fig. 11 ist die Flanschverbindung 1 dargestellt, welche das Druckregulierungssystem 130 mit dem Gaseinlass 105 verbindet.

In der folgenden Beschreibung bevorzugter Ausführungsbeispiele der erfindungsgemässen Flanschverbindung 1 wird also mit beispielhaftem Charakter jeweils auf die Flanschverbindung 1 Bezug genommen, welche den Gaseinlass 105 mit dem Druckregulierungssystem 130 verbindet. Selbstverständlich kann die Flanschverbindung 1 auch an jeder anderen Stelle vorgesehen sein, an der zwei doppelwandige Leitungsteile miteinander verbunden werden müssen, also insbesondere auch zwischen den Komponenten des Druckregulierungssystem 130, dem iGPR.

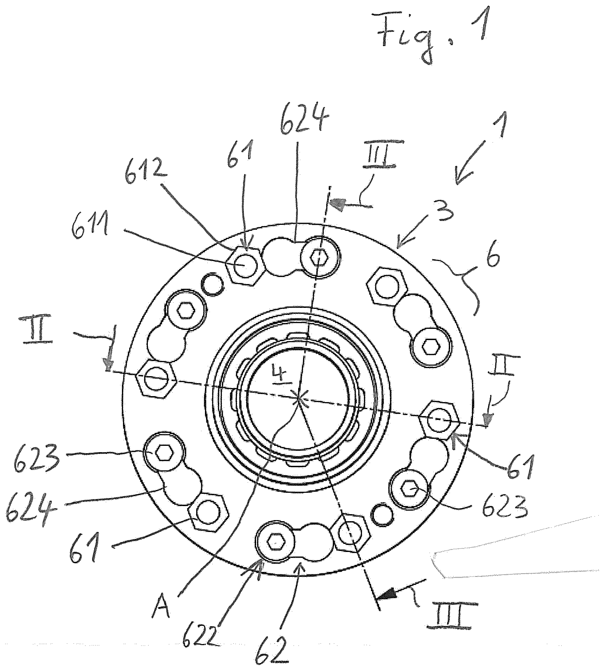

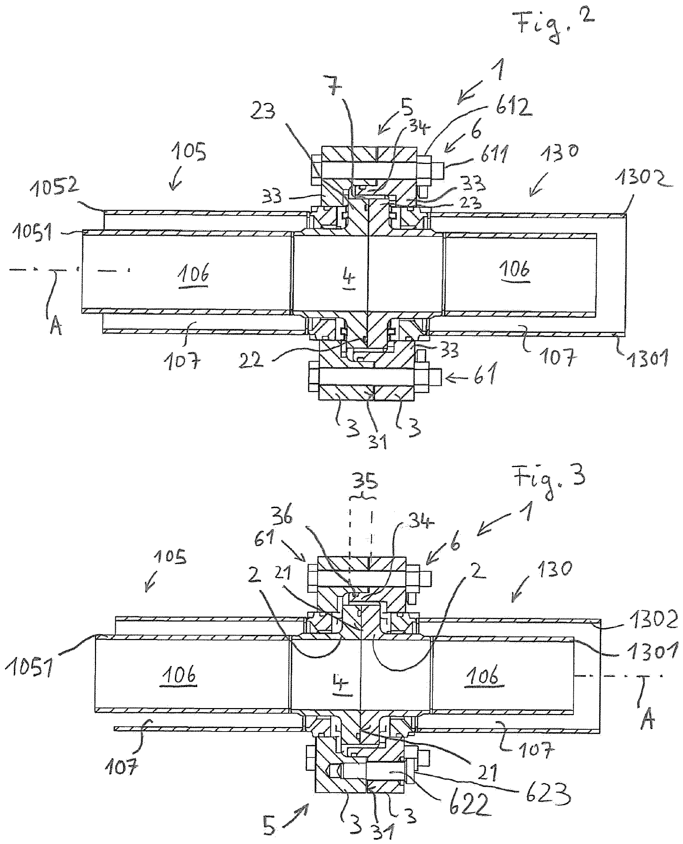

Im Folgenden wird nun anhand der Fig. 1 bis Fig. 3 ein erstes Ausführungsbeispiel einer erfindungsgemässen Flanschverbindung 1 erläutert. Dabei zeigt Fig. 1 eine Aufsicht auf das erste Ausführungsbeispiel der erfindungsgemässen Flanschverbindung 1 in axialer Richtung A, welche derjenigen Richtung entspricht, in der das erste Fluid - hier also das als Brennstoff dienende Gas - die Flanschverbindung 1 durchströmt. In Fig. 1 ist also die Aufsicht gezeigt, wenn man in axialer Richtung A auf die Flanschverbindung 1 blickt. Fig. 2 zeigt eine Schnittdarstellung der Flanschverbindung 1 in einem Schnitt entlang der Schnittlinie II-II in Fig. 1. Fig. 3 zeigt eine Schnittdarstellung der Flanschverbindung 1 in einem Schnitt entlang der Schnittlinie III-III in Fig. 1.

Eine zur axialen Richtung A senkrechte Richtung wird im Folgenden als radiale Richtung bezeichnet.

Die Flanschverbindung 1 zum Verbinden der beiden doppelwandigen Leitungsteile des Gaseinlasses 105 und des Druckregulierungssystem 130 umfasst zwei erste Flansche 2, von denen jeder mit einer inneren Wandung 1051 bzw. 1301 eines der beiden Leitungsteile 105, 130 verbunden ist, d.h. einer der ersten Flansche 2 ist mit der inneren Wandung 1051 des Gaseinlasses 105 verbunden und der andere erste Flansch 2 ist mit der inneren Wandung 1301 des Druckregulierungssystems 130 verbunden. Jeder erste Flansch 2 ist vorzugsweise unlösbar mit der jeweiligen inneren Wandung 1051 bzw. 1301 verbunden, beispielsweise durch eine Verschweissung.

Die Flanschverbindung 1 weist ferner einen zentral angeordneten Fluidkanal 4 auf, der sich in axialer Richtung A durch die beiden ersten Flansche 2 hindurch erstreckt, und die beiden inneren Kanäle 106 miteinander verbindet, sodass das als Brennstoff verwendete Gas aus dem inneren Kanal 106 des Gaseinlasses 105 durch den Fluidkanal 4 der Flanschverbindung 1 in den inneren Kanal 106 des Druckregulierungssystems 130 strömen kann.

Jeder erste Flansch 2 weist eine axiale Stirnfläche 21 auf, wobei die ersten Flansche 2 so angeordnet sind, dass die beiden axialen Stirnflächen 21 aneinander anliegen. In mindestens einer dieser Stirnflächen 21 ist ein Dichtungselement 22 vorgesehen, vorzugsweise ein O-Ring 22, sodass das Gas nicht aus dem Fluidkanal 4 zwischen den beiden Stirnflächen 21 hindurch austreten kann. Ferner ist mindestens ein erstes Befestigungselement 5 vorgesehen, mit welchem die beiden ersten Flansche 2 aneinander fixiert werden können, sodass die beiden axialen Stirnflächen 21 gegeneinander gepresst werden. Das erste Befestigungselement 5 wird später noch eingehender erläutert.

Die Flanschverbindung 1 umfasst ferner zwei zweite Flansche 3, von denen jeder mit einer äusseren Wandung 1052 bzw. 1302 eines der beiden Leitungsteile 105, 130 verbunden ist, d.h. einer der zweiten Flansche 3 ist mit der äusseren Wandung 1052 des Gaseinlasses 105 verbunden und der andere zweite Flansch 3 ist mit der äusseren Wandung 1302 des Druckregulierungssystems 130 verbunden. Jeder zweite Flansch 3 ist vorzugsweise unlösbar mit der jeweiligen äusseren Wandung 1052 bzw. 1302 verbunden, beispielsweise durch eine Verschweissung.

Jeder zweite Flansch 3 weist eine axiale Stirnfläche 31 auf, wobei die zweiten Flansche 3 so angeordnet sind, dass die beiden axialen Stirnflächen 31 aneinander anliegen. Ferner ist mindestens ein zweites Befestigungselement 6 vorgesehen, mit welchem die beiden zweiten Flansche 3 relativ zueinander fixiert werden können. Bei dem ersten Ausführungsbeispiel werden die beiden axialen Stirnflächen 31 der zweiten Flansche 3 mittels des zweiten Befestigungselements 6 gegeneinander gepresst.

Ferner begrenzen die beiden zweiten Flansche 3 eine Strömungsverbindung 7 für ein zweites Fluid, also beispielsweise das Schutzmedium, sodass das zweite Fluid aus dem äusseren Kanal 107 des Gaseinlasses 105 durch die Strömungsverbindung 7 zwischen den beiden ersten Flanschen 2 und den beiden zweiten Flanschen 3 hindurch in den äusseren Kanal 107 des Druckregulierungssystems 130 strömen kann. Dabei durchströmt das zweite Fluid die Flanschverbindung 1 getrennt von dem ersten Fluid, welches durch den zentral angeordneten Fluidkanal 4 strömt.

Bei dem ersten Ausführungsbeispiel, dienen die beiden zweiten Flansche 3 als erstes Befestigungsmittel 5, mit welchem die axialen Stirnflächen 21 der beiden ersten Flansche 2 gegeneinander gepresst werden.

Hierzu weist jeder zweite Flansch 3 jeweils einen ringförmigen Vorsprung 33 auf, der radial innenliegend an dem jeweiligen zweiten Flansch 3 angeordnet ist, sodass die beiden zweiten Flansche 3 im zusammengebauten Zustand eine ringförmige Nut bilden, die sich in Umfangsrichtung erstreck und in welcher die beiden ersten Flansche 2 aufgenommen werden. Das heisst jeder der beiden ersten Flansche 2 weist einen ringförmigen radial aussenliegenden Bereich 23 auf, der von den beiden Vorsprüngen 33 der zweiten Flansche 3 umgriffen wird. Im zusammengesetzten Zustand sind also die beiden radial aussenliegenden Bereiche 23 der ersten Flansche 2 bezüglich der axialen Richtung A zwischen den beiden Vorsprüngen 33 der zweiten Flansche 3 angeordnet.

Wenn dann mit Hilfe der zweiten Befestigungsmittel 6 die beiden zweiten Flansche 3 gegeneinander verspannt werden, so werden hierdurch auch die axialen Stirnflächen 21 der beiden ersten Flansche dichtend gegeneinander gepresst. Auf diese Weise fungieren die beiden zweiten Flansche 3 als erstes Befestigungsmittel 5, mit welchem die beiden ersten Flansche 2 gegeneinander gepresst werden.

Es hat sich als eine vorteilhafte Massnahme erwiesen, die beiden zweiten Flansche 3 so auszugestalten und anzuordnen, dass sie sich bezüglich der axialen Richtung A überlappen. Hierzu weist der darstellungsgemäss (Fig. 2, Fig. 3) rechte zweite Flansch 3 radial innenliegend bezüglich seiner axialen Stirnfläche 31 einen ringförmigen Ansatz 34 auf, auf welchem der darstellungsgemäss linke zweite Flansch 3 aufliegt. Somit bilden der ringförmige Vorsprung 34 und der darstellungsgemäss linke zweite Flansch 3 einen Überlappungsbereich 35, in welchem sich die beiden zweiten Flansche 3 in axialer Richtung A gesehen überlappen. Vorzugsweise ist in diesem Überlappungsbereich 35 ein Dichtungselement 36, vorzugsweise ein O-Ring 36, angeordnet, um die Abdichtung zwischen den beiden zweiten Flanschen 3 zu verbessern.

Die zweiten Befestigungselemente 6 mit welchem die beiden zweiten Flansche 3 relativ zueinander fixiert werden können, umfassen eine Mehrzahl von Verschraubungen 61 und zusätzlich eine Bajonettverbindung 62, welche die Fixierung der beiden zweiten Flansche 3 relativ zueinander sichert.

Wie dies insbesondere in den Fig. 1 und Fig. 2 zu erkennen ist, sind die Verschraubungen 61, hier sechs Verschraubungen, auf einer Kreislinie um den Fluidkanal 4 herum angeordnet. Jede Verschraubung 61 umfasst jeweils einen Gewindebolzen oder eine Schraube 611 sowie eine Mutter 612. Jede Schraube 611 erstreckt sich in axialer Richtung A durch beide zweiten Flansche 3 hindurch, sodass durch ein Anziehen der Muttern 612 die beiden zweiten Flansche 3 relativ zueinander fixiert und ihre Stirnflächen gegeneinander gepresst werden.

Wie dies insbesondere in den Fig. 1 und Fig. 3 zu erkennen ist, umfasst die Bajonettverbindung 62 eine Mehrzahl von Bolzen 622, die in Bohrungen in einem der beiden zweiten Flansche 3, in Fig.3 ist dies der darstellungsgemäss linke zweite Flansch 3 fixiert sind. Es sind insgesamt sechs Bolzen 622 vorgesehen, welche jeweils zwischen zwei der Verschraubungen 61 angeordnet sind. Jeder Bolzen 622 erstreckt sich axialer Richtung A und weist an seinem freien Ende einen Flachkopf 623 auf. In dem anderen der beiden Flansche 3, in Fig. 3 ist dies der darstellungsgemäss rechte zweite Flansch 3, ist für jeden Bolzen 622 ein Langloch 624 vorgesehen, welches an seinem einen Ende (in Umfangsrichtung gesehen) einen Durchmesser aufweist, der grösser ist als der Durchmesser des Flachkopfes 623 des Bolzens 622, und welches an seinem anderen Ende einen Durchmesser aufweist, welcher kleiner ist als der Durchmesser des Flachkopfes 623 des Bolzens 622. Jeder Bolzen 622 ist in axialer Richtung A so bemessen, dass er das ihm zugeordnete Langloch 624 durchgreifen kann.

Zur Montage werden dann - wie für eine Bajonettverbindung 62 üblich - zunächst die beiden zweiten Flansche 3 so zusammengesteckt, dass jeder Flachkopf 623 durch dasjenige Ende des ihm zugeordneten Langlochs 624, welches den grösseren Durchmesser aufweist, hindurchgreift. Anschliessend wird die Bajonettverbindung 62 verriegelt, indem die beiden zweiten Flansche 3 relativ zueinander um die axiale Richtung A gedreht werden, sodass die Bolzen 622 mit den Flachköpfen 623 nun jeweils an demjenigen Ende des Langlochs 624 anliegen, welches den kleineren Durchmesser aufweist.

Somit sind zwei voneinander unabhängige Verbindungen vorgesehen, welche die Flanschverbindung 1 gegen eine Leckage oder gegen ein Öffnen der Flanschverbindung sichern. Als erstes Befestigungselemente 5 zum Fixieren der beiden ersten Flansche 2 dienen die beiden zweiten Flansche 3, welche die beiden ersten Flansche 2 gegeneinander presst. Sollte nun an den Verschraubungen 61, welche als Teil der zweiten Befestigungselemente 6-+ die beiden zweiten Flansche 3 gegeneinander verspannt, eine Fehlfunktion oder eine Schädigung auftreten, so gewährleistet die Bajonettverbindung 62, dass sich die Verbindung zwischen den beiden zweiten Flanschen 3 nicht öffnet, sondern dicht bleibt. Hierdurch ist dann auch sichergestellt, dass die dichtende Verbindung zwischen den beiden ersten Flanschen erhalten wird. Dies bedeutet eine erhebliche Erhöhung der Betriebssicherheit der Flanschverbindung 1.

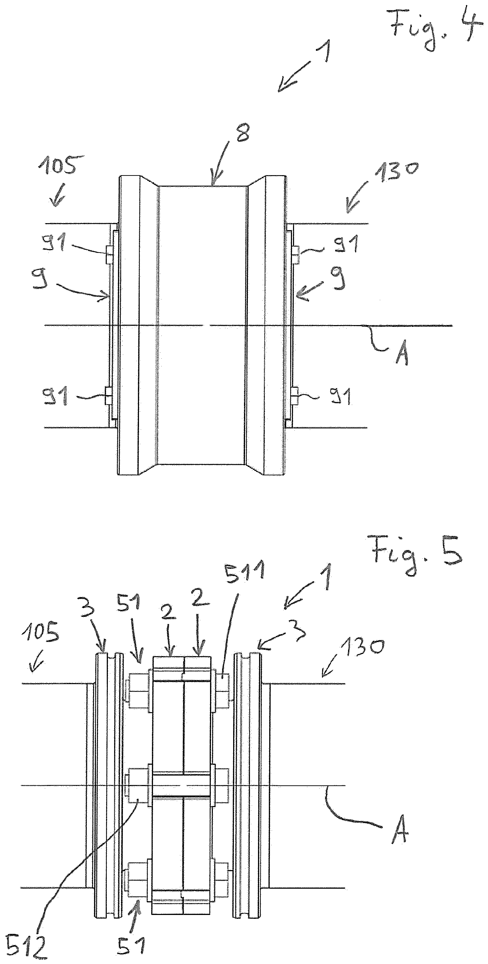

Im Folgenden wird nun anhand der Fig.4 bis Fig. 7 ein zweites Ausführungsbeispiel der erfindungsgemässen Flanschverbindung 1 erläutert. Dabei wird nur auf die Unterschiede zu dem ersten Ausführungsbeispiel detaillierter eingegangen. Ansonsten gelten die Erklärungen bezüglich des ersten Ausführungsbeispiels in gleicher oder sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet, die im Zusammenhang mit dem ersten Ausführungsbeispiel erläutert sind.

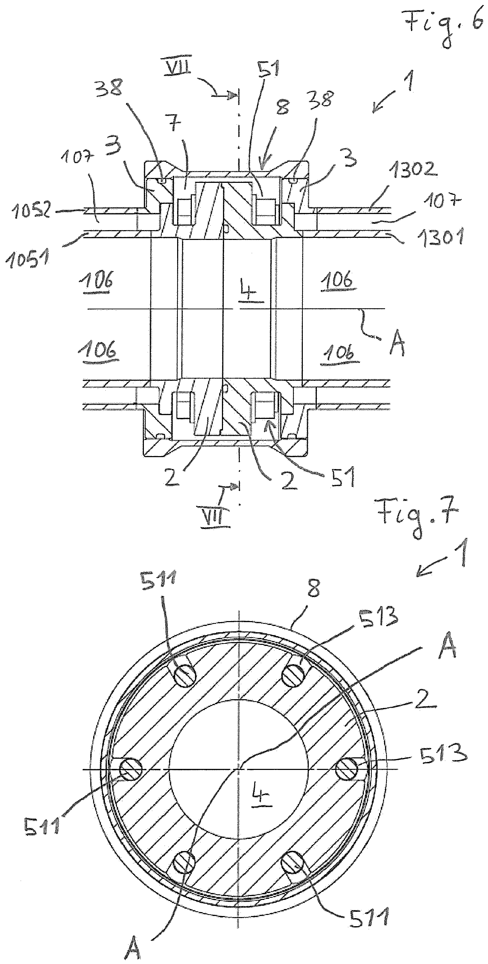

Fig. 4 zeigt eine Ansicht des zweiten Ausführungsbeispiels der erfindungsgemässen Flanschverbindung 1. Fig. 5 zeigt eine Ansicht des zweiten Ausführungsbeispiels wie in Fig. 4, wobei jedoch zum besseren Verständnis eine Hülse sowie Fixierungselemente entfernt sind. Fig. 6 zeigt eine Schnittdarstellung des zweiten Ausführungsbeispiels der Flanschverbindung 1 in einem Schnitt entlang der axialen Richtung A, und Fig. 7 zeigt eine Schnittdarstellung des zweiten Ausführungsbeispiels in einem Schnitt entlang der Schnittlinie VII-VII in Fig. 6.

Bei dem zweiten Ausführungsbeispiel der erfindungsgemässen Flanschverbindung sind die beiden zweiten Flansche 3 bezüglich der axialen Richtung A beabstandet zueinander angeordnet (siehe insbesondere Fig. 5 und Fig. 6). Die ersten beiden Flansche 2 sind bezüglich der axialen Richtung A zwischen den beiden zweiten Flanschen 3 angeordnet. Ferner ist eine im Wesentlichen zylindrische Hülse 8 vorgesehen, welche die beiden ersten Flansche 2 sowie die beiden zweiten Flansche 3 radial aussenliegend umgibt.

Die Hülse 8 ist so bemessen, dass sie auf den beiden zweiten Flanschen 3 aufliegt und den Zwischenraum zwischen den beiden zweiten Flanschen 3 bezüglich der radialen Richtung abschliesst. Der Innendurchmesser der Hülse 8 entspricht im Wesentlichen dem Aussendurchmesser der beiden zweiten Flansche 3, sodass die Hülse 8 in axialer Richtung A über die beiden zweiten Flansche 3 geschoben werden kann. Vorzugsweise ist der Aussendurchmesser der beiden ersten Flansche 2 kleiner als der Aussendurchmesser der beiden zweiten Flansche 3 und damit auch kleiner als der Innendurchmesser der Hülse 8. Durch diese Massnahme lässt sich in einfacher Weise die Strömungsverbindung 7 für das zweite Fluid realisieren.

Ferner sind mehrere Fixierungselemente 9 vorgesehen, welche die Hülse 8 bezüglich der zweiten Flansche 3 fixieren. Diese Fixierungselemente 9 sind nur in Fig. 4 dargestellt. Bei dem zweiten Ausführungsbeispiel sind insgesamt vier Fixierungselemente 9 vorgesehen, nämlich zwei auf jeder Seite der Flanschverbindung 1. Jedes Fixierungselement 9 ist als ein scheibenförmiges Ringsegment ausgestaltet, das sich beispielsweise etwa über einen Viertelkreis erstreckt. Wie dies in Fig. 6 gezeigt ist, schliesst die Hülse 8 bezüglich der axialen Richtung A bündig mit den beiden zweiten Flanschen 3 ab. Zur Fixierung der Hülse 8 werden auf jeder axialen Stirnfläche der Hülse 8 jeweils zwei der Fixierungselemente 9 mittels Schrauben 91 (Fig. 4) befestigt. Bezüglich ihrer radialen Erstreckung sind die Fixierungselement 9 so bemessen, dass sie jeweils die axialen Stirnflächen der Hülse 8 radial nach innen überragen und somit an den äusseren axialen Stirnflächen der zweiten Flansche 3 anliegen. Auf diese Weise kann die Hülse 8 bezüglich der zweiten Flansche 3 fixiert werden. Vorzugsweise ist zwischen jedem zweiten Flansch 3 und der Hülse 8 jeweils ein Dichtelement vorgesehen, das bevorzugt als O-Ring ausgestaltet ist. Für diesen O-Ring ist beispielsweise in der radial aussenliegenden Begrenzungsfläche des jeweiligen zweiten Flansches 3 eine Umfangsnut 38 vorgesehen, in welche der O-Ring eingelegt wird.

Bei dem zweiten Ausführungsbeispiel umfassen somit die zweiten Befestigungselemente die Hülse 8 sowie die Fixierungselemente 9.

Als erste Befestigungselemente 5 sind bei dem zweiten Ausführungsbeispiel eine Mehrzahl von Verschraubungen 51 vorgesehen, die auf einer Kreislinie um den zentralen Fluidkanal 4 herum angeordnet sind. Bei dem zweiten Ausführungsbeispiel sind mit beispielhaftem Charakter sechs Verschraubungen 51 als erste Befestigungselemente vorgesehen.

Jede Verschraubung 51 umfasst jeweils einen Gewindebolzen oder eine Schraube 511 sowie eine Mutter 512. Für jede Schraube 511 ist jeweils in der radial aussenliegenden Mantelfläche der beiden ersten Flansche 2 eine nach aussen (bezüglich der radialen Richtung) offene Nut 513 vorgesehen, welche sich jeweils in axialer Richtung A durch beide erste Flansche 2 hindurch erstreckt. Jede Nut 513 hat ein im Wesentlichen U-förmiges Profil. Die Ausgestaltung mit den nach aussen offenen Nuten 513 hat den Vorteil, dass die Verschraubungen 51 jeweils von aussen in die Nut 513 eingelegt werden können und nicht durch Bohrungen hindurchgeführt werden müssen. Durch ein Anziehen der Muttern 512 werden die beiden ersten Flansche 2 relativ zueinander fixiert und ihre Stirnflächen 21 werden gegeneinander gepresst.

Nachdem die ersten Befestigungselemente montiert sind, wird die Hülse 8 über die beiden zweiten Flansche 3 geschoben und mittels der Fixierungselemente 9 an den zweiten Flanschen 3 fixiert.

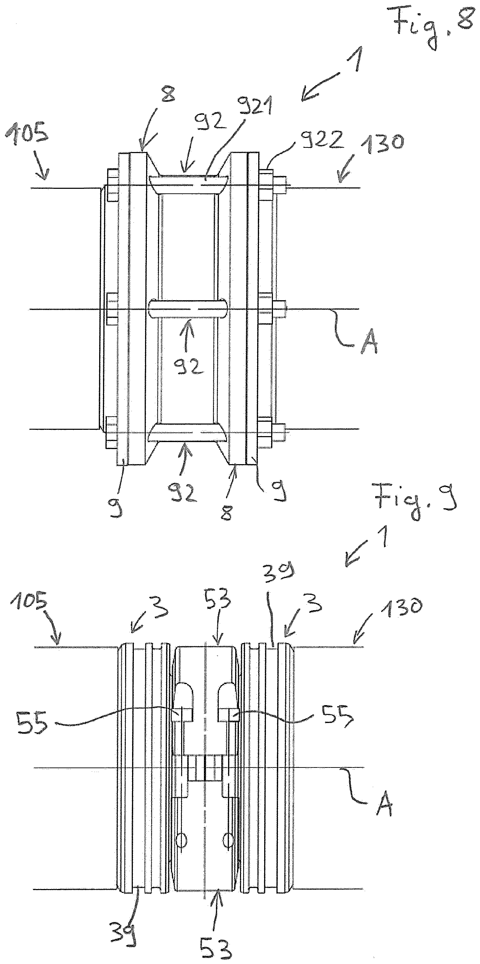

Im Folgenden wird nun anhand der Fig. 8 bis Fig. 10 ein drittes Ausführungsbeispiel der erfindungsgemässen Flanschverbindung 1 erläutert. Dabei wird nur auf die Unterschiede zu dem ersten und dem zweiten Ausführungsbeispiel detaillierter eingegangen. Ansonsten gelten die Erklärungen bezüglich des ersten und zweiten Ausführungsbeispiels in gleicher oder sinngemäss gleicher Weise auch für das dritte Ausführungsbeispiel. Bei dem dritten Ausführungsbeispiel sind gleiche Teile oder von der Funktion her gleichwertige Teile mit den gleichen Bezugszeichen bezeichnet, die im Zusammenhang mit dem ersten und dem zweiten Ausführungsbeispiel erläutert sind.

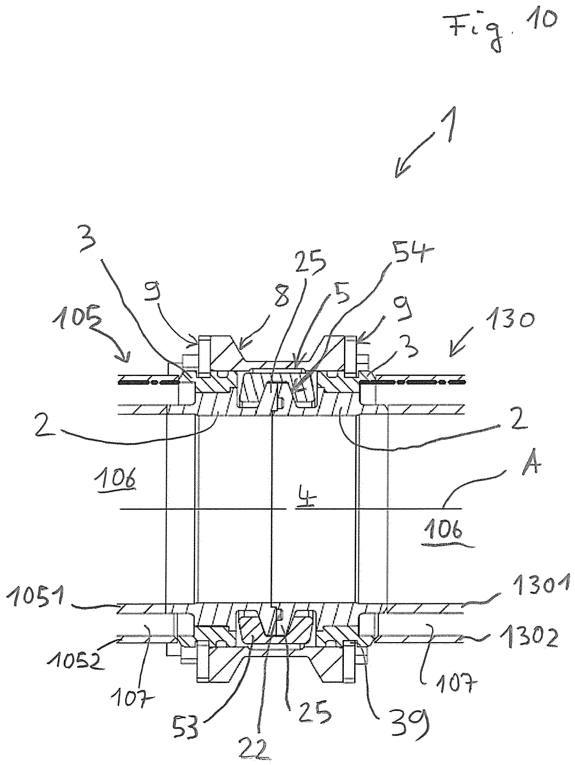

Fig. 8 zeigt eine Ansicht eines dritten Ausführungsbeispiels einer erfindungsgemässen Flanschverbindung 1. Fig. 9 zeigt eine Ansicht des dritten Ausführungsbeispiels, wobei zum besseren Verständnis die Hülse 8 und die Fixierungselemente 9 entfernt sind. Fig. 10 zeigt eine Schnittdarstellung des dritten Ausführungsbeispiels in einem Schnitt entlang der axialen Richtung A,

Bei dem dritten Ausführungsbeispiel der erfindungsgemässen Flanschverbindung 1 sind die beiden zweiten Flansche 3 bezüglich der axialen Richtung A beabstandet angeordnet, und es ist die Hülse 8 vorgesehen, welche sich in axialer Richtung A von dem einen der zweiten Flansche bis zu dem anderen der zweiten Flansche erstreckt. Es sind vier Fixierungselemente 9 vorgesehen, welche die Hülse 8 bezüglich der zweiten Flansche 3 fixieren. Es sind insgesamt vier Fixierungselemente 9 vorgesehen, nämlich zwei auf jeder Seite der Flanschverbindung 1. Jedes Fixierungselement 9 ist als ein scheibenförmiges Ringsegment ausgestaltet, das sich beispielsweise etwa über einen Halbkreis erstreckt. Wie dies Fig. 10 zeigt, greifen die Fixierungselement 9 jeweils in eine Umfangsnut 39 ein, welche in der radial aussenliegenden Begrenzungsfläche des jeweiligen zweiten Flansches 3 vorgesehen ist. Zum Fixieren der Hülse 8 sind ferner eine Mehrzahl von Verschraubungen 92 vorgesehen, die jeweils einen Gewindebolzen 921 und eine Mutter 922 umfassen. Die Fixierungselemente 9 liegen aussen an den axialen Stirnflächen der beiden zweiten Flansche 3 an. Jeder Gewindebolzen 921 erstreckt sich in axialer Richtung A durch zwei der Fixierungselemente 9 sowie durch die Hülse 8. Durch Anziehen der Muttern 922 werden die beiden zweiten Flansche 3 über die Hülse 8 relativ zueinander fixiert.

Die beiden inneren Flansche 2 sind über eine Klemmverbindung miteinander verspannt. Dazu weist jeder erste Flansch 2 einen Kragen 25 auf welcher jeweils die axiale Stirnfläche 21 des ersten Flansches 2 bildet. Die beiden Kragen 25, welche bezüglich der radialen Richtung nach aussen über den Rest der ersten Flansche 2 hinausragen, liegen im montierten Zustand aneinander an.

Das erste Befestigungselement 5 ist als Klemmvorrichtung ausgestaltet und umfasst zwei Klemmelemente 53, die jeweils eine in Umfangsrichtung der ersten Flansche 2 verlaufende Nut 54 aufweisen, welche zur Aufnahme der beiden Kragen 25 ausgestaltet ist. Jedes Klemmelement 53 ist im Wesentlichen halbringförmig ausgestaltet. Es ist eine Mehrzahl von Spannelementen 55 vorgesehen, hier nämlich vier Spannelemente, um die beiden Klemmelemente 53 miteinander zu verspannen.

Jedes Spannelement 55 ist als Schraube ausgestaltet, für die in der Wandung des einen der Klemmelemente 53 eine Bohrung vorgesehen ist, die sich senkrecht zur axialen Richtung A erstreckt. In der Wandung des anderen Klemmelements 53 ist eine entsprechende Gewindebohrung vorgesehen sodass durch Eingreifen der jeweiligen Schraube in die Gewindebohrung und durch Anziehen der jeweiligen Schraube die beiden Klemmelemente 53 gegeneinander gezogen werden und somit die beiden ersten Flansche 2 dichtend gegeneinander presst.

Besonders bevorzugt sind die beiden Kragen 25 derart ausgestaltet, dass sie gemeinsam in Umfangsrichtung gesehen ein trapezförmiges Profil bilden (siehe Fig. 10), das sich in radialer Richtung nach aussen hin verjüngt. Dementsprechend sind die Nuten 54 der beiden Klemmelemente 53 ebenfalls mit einem trapezförmigen Profil ausgestaltet, sodass die Kragen flächig an den Wandungen der Nuten 54 anliegen.

## Patentansprüche

1. Flanschverbindung zum Verbinden zweier doppelwandiger Leitungsteile eines Gasversorgungssystems, welche zwei erste Flansche (2) umfasst, von denen jeder mit einer inneren Wandung (1051, 1301) eines der beiden Leitungsteile (105, 130) verbindbar ist, sowie einen zentral angeordneten Fluidkanal (4) für ein erstes Fluid, der sich in einer axialen Richtung (A) durch die beiden ersten Flansche (2) hindurch erstreckt, wobei jeder erste Flansch (2) eine axiale Stirnfläche (21) umfasst und die beiden axialen Stirnflächen (21) aneinander anliegen, und wobei mindestens ein erstes Befestigungselement (5) vorgesehen ist, mit welchem die beiden ersten Flansche (2) aneinander fixiert werden können, **dadurch gekennzeichnet, dass** zwei zweite Flansche (3) vorgesehen sind, von denen jeder mit einer äusseren Wandung (1052, 1302) eines der beiden Leitungsteile verbindbar ist, wobei die beiden zweiten Flansche (3) eine Strömungsverbindung (7) für ein zweites Fluid begrenzen, durch welche das zweite Fluid die Flanschverbindung (1) getrennt von dem ersten Fluid durchströmen kann, wobei mindestens ein zweites Befestigungselement (6) vorgesehen ist, mit welchem die beiden zweiten Flansche relativ zueinander fixiert werden können, und wobei das zweite Befestigungselement (6) verschieden von dem ersten Befestigungselement (5) ist.

2. Flanschverbindung nach Anspruch 1, wobei eine Mehrzahl von ersten Befestigungselementen (5) oder eine Mehrzahl von zweiten Befestigungselementen (6) vorgesehen ist, und wobei die ersten Befestigungselemente (5) oder die zweiten Befestigungselemente (6) als Verschraubungen (51, 61) ausgestaltet sind.

3. Flanschverbindung nach einem der vorangehenden Ansprüche, wobei die beiden zweiten Flansche (3) so ausgestaltet und angeordnet sind, dass sie sich bezüglich der axialen Richtung (A) überlappen.

4. Flanschverbindung nach einem der vorangehenden Ansprüche, wobei die beiden zweiten Flansche (3) das erste Befestigungselement (5) bilden und so ausgestaltet und angeordnet sind, dass sie einen jeweils radial aussenliegenden Bereich (23) der beiden ersten Flansche umgreifen, sodass die beiden radial aussenliegenden Bereiche (23) der ersten Flansche (2) bezüglich der axialen Richtung (A) zwischen den beiden zweiten Flanschen (3) angeordnet sind.

5. Flanschverbindung nach Anspruch 4, wobei eine Mehrzahl von zweiten Befestigungselementen vorgesehen ist, wobei die zweiten Befestigungselemente Verschraubungen (61) umfassen, sowie eine Bajonettverbindung (62), welche die Fixierung der beiden zweiten Flansche (3) sichert.

6. Flanschverbindung nach einem der Ansprüch 1-2, wobei die beiden zweiten Flansche (3) bezüglich der axialen Richtung (A) beabstandet zueinander angeordnet sind, und die beiden ersten Flansche (2) bezüglich der axialen Richtung zwischen den beiden zweiten Flanschen (3) angeordnet sind, und wobei eine im Wesentlichen zylindrische Hülse (8) vorgesehen ist, welche die beiden ersten Flansche (2) und die beiden zweiten Flansche (3) radial aussenliegend umgibt.

7. Flanschverbindung nach Anspruch 6, wobei eine Mehrzahl von Fixierungselementen (9) vorgesehen ist, welche die Hülse (8) bezüglich der beiden zweiten Flansche (3) fixiert.

8. Flanschverbindung nach einem der Ansprüche 6-7, wobei zwischen jedem zweiten Flansch (3) und der Hülse (8) jeweils ein Dichtelement vorgesehen ist.

9. Flanschverbindung nach einem der Ansprüche 6-8, wobei jeder erste Flansch (2) einen Kragen (25) aufweist, welcher jeweils die axiale Stirnfläche (21) des ersten Flansches (2) bildet, wobei das erste Befestigungselement (5) als Klemmvorrichtung ausgestaltet ist, welche zwei Klemmelemente (53) umfasst, die jeweils eine in Umfangsrichtung der ersten Flansche (2) verlaufende Nut (54) aufweisen, welche zur Aufnahme der beiden Kragen (25) ausgestaltet ist, und wobei eine Mehrzahl von Spannelementen (55) vorgesehen ist, mit denen die Klemmelemente (53) gegeneinander verspannbar sind.

10. Flanschverbindung nach Anspruch 9, wobei die beiden Kragen (25) derart ausgestaltet sind, dass sie gemeinsam in Umfangsrichtung gesehen ein trapezförmiges Profil bilden, das sich in radialer Richtung nach aussen verjüngt.

11. Flanschverbindung nach einem der Ansprüche 9-10, wobei jedes Spannelement (55) eine Schraube umfasst, die sich jeweils senkrecht zur axialen Richtung (A) erstreckt.

12. Flanschverbindung nach einem der Ansprüche 7-11, wobei die Fixierungselemente (9) eine Mehrzahl von Schrauben (921) umfassen, die in axialer Richtung (A) jeweils länger sind als die Hülse (8), welche die zweiten Flansche (3) umgibt.

13. Gasversorgungssystem für einen Grossmotor, mit welchem mindestens einem Zylinder (210) des Grossmotors (200) ein Gas als Brennstoff zuführbar ist, umfassend ein erstes doppelwandiges Leitungsteil sowie ein zweites doppelwandiges Leitungsteil, wobei jedes Leitungsteil einen inneren Kanal (106) für den gasförmigen Brennstoff umfasst, sowie einen um den inneren Kanal herum angeordneten äusseren Kanal (107) für ein zweites Fluid, **dadurch gekennzeichnet, dass** die beiden doppelwandigen Leitungsteile mit einer Flanschverbindung (1) verbunden sind, die nach einem der vorangehenden Ansprüche ausgestaltet ist.

14. Grossmotor mit mindestens einem Zylinder (210), wobei ein Gasversorgungssystem (150) vorgesehen ist, mit welchem jedem Zylinder (210) ein Gas als Brennstoff zuführbar ist, **dadurch gekennzeichnet, dass** das Gasversorgungssystem (150) nach Anspruch 13 ausgestaltet ist.

15. Grossmotor nach Anspruch 14 ausgestaltet als längsgespülter Zweitakt-Grossdieselmotor, vorzugsweise als Dual-Fuel Grossdieselmotor, der in einem Flüssigmodus betreibbar ist, in welchem ein flüssiger Brennstoff zur Verbrennung in den Zylinder (210) eingebracht wird, und der ferner in einem Gasmodus betreibbar ist, in welchem ein Gas als Brennstoff in den Zylinder (210) eingebracht wird.
